# EUROPEAN PATENT APPLICATION

(11) **EP 2 040 005 A1**
(43) Date of publication of application: **25.03.2009**
(21) Application number: 08152143.7
(22) Date of filing: 29.02.2008
(51) Int. Cl.: F24C 14/00

(54) **Cooking apparatus and method of controlling steam cleaning thereof**

(30) Priority: 21.09.2007 KR 20070096715
(71) Applicant: Samsung Electronics Co., Ltd., Suwon-si, Gyeonggi-do 442-743 (KR)
(72) Inventor: Kang, Min Jae, Chungbuk (KR); Kwon, Yong Hyun, Yongin-si Gyeonggi-do (KR); Hong, Seok Weon, Yongin-si Gyeonggi-do (KR); Lee, Tae Uk, Hwaseong-si Gyeonggi-do (KR); Cho, Pung Yeun, Gyeonggi-do (KR); Kang, Han Seong, Gyeonggi-do (KR); Park, Sung Soo, Hwaseong-si Gyeonggi-do (KR); Sung, Han Jun, Gilheung-gu Gyeonggi-do (KR); Kim, Sung Kwang, Gyeonggi-do (KR); Kim, Hyung Jin, Gyeongsangbuk-do (KR); Kim, Tae Hun, Seoul (KR)
(74) Representative: Grünecker, Kinkeldey, Stockmair & Schwanhäusser Anwaltssozietät

(57) **Abstract**

A cooking apparatus and a method of controlling steam cleaning thereofrealize optimal cleaning performance by maintaining an internal temperature of a cooking chamber at a temperature suitable for steam condensation at the time of cleaning the inside of the cooking chamber using steam. The cooking apparatus includes a cooking chamber, a steam supplying unit to supply steam into the cooking chamber, a temperature sensing unit to sense an internal temperature of the cooking chamber, and a control unit to compare the sensed internal temperature with a reference temperature and operate the steam supplying unit if the internal temperature of the cooking chamber is less than the reference temperature.

## Description

### BACKGROUND

### 1. Field

The present invention relates to a cooking apparatus and a method of controlling steam cleaning thereof, and, more particularly, to a cooking apparatus and a method of controlling steam cleaning thereof, which are capable of realizing optimal cleaning performance by maintaining an internal temperature of a cooking chamber at a temperature suitable for steam condensation at the time of cleaning the inside of the cooking chamber using steam.

### 2. Description of the Related Art

In general, a cooking apparatus includes a microwave oven using a high frequency and an oven using a heater. The cooking apparatus includes a cavity (hereinafter, referred to as a cooking chamber) to cook food in an airtight state such that the food contained in the cooking chamber is heated and cooked.

However, in the cooking apparatus, various scraps are separated from the food, are scattered, and are attached to the inside of the cooking chamber during cooking. Then, the various scraps are dried and are stuck to the inside (e.g., a wall) of the cooking chamber after cooking. Accordingly, it is difficult for a user to eliminate the scraps when cleaning the inside of the cooking chamber.

To solve such a problem, a method of generating steam and cleaning the inside of a cooking chamber was suggested in Korean Unexamined Patent Application Publication No. 2004-0042671.

In the method of cleaning the cooking chamber suggested in the above publication, a water container, which contains water used for generating steam, is provided in the bottom of the cooking chamber, and steam is generated at the time of cleaning such that the inside of the cooking chamber is covered by moisture. Thus, scraps of food in the cooking chamber are more easily eliminated. Accordingly, it is possible to easily clean the inside of the cooking chamber.

However, such a method of cleaning the cooking chamber generates steam without considering the internal temperature of the cooking chamber. Accordingly, when the steam cleaning is performed in a state in which the internal temperature of the cooking chamber is high, the inside (e.g., a wall) of the cooking chamber is not sufficiently covered with moisture, that is, the steam is not sufficiently condensed. Thus, it is difficult to eliminate the scraps of the food in the cooking chamber, and thus, cleaning performance deteriorates.

### SUMMARY

Therefore, it is an aspect of the invention to provide a cooking apparatus and a method of controlling steam cleaning thereof, which improve cleaning performance by maintaining an internal temperature of a cooking chamber at a temperature suitable for steam condensation at a time of cleaning the inside of the cooking chamber using steam so as to maximize the amount of steam.

It is another aspect of the invention to provide a cooking apparatus and a method of controlling steam cleaning thereof, which optimize steam cleaning performance by driving a fan at an initial steam cleaning operation to make a temperature distribution in a cooking chamber uniform and then perform the steam cleaning in a state in which the inside of the cooking chamber is uniformly covered by moisture.

It is yet another aspect of the invention to provide a cooking apparatus and a method of controlling steam cleaning thereof, which realize optimal steam cleaning performance by sensing an internal temperature of a cooking chamber when steam cleaning is started, performing steam cleaning if the internal temperature is less than a predetermined temperature, and driving a fan for a predetermined time to reduce the internal temperature of the cooking chamber, and then performing the steam cleaning if the internal temperature is equal to or greater than the predetermined temperature.

In accordance with the invention, the above and/or other aspects can be achieved by a cooking apparatus including: a cooking chamber; a steam supplying unit to supply steam into the cooking chamber; a temperature sensing unit to sense an internal temperature of the cooking chamber; and a control unit to compare the sensed internal temperature with a reference temperature and operate the steam supplying unit if the internal temperature of the cooking chamber is less than the reference temperature.

The control unit may stop the operation of the steam supplying unit if the internal temperature of the cooking chamber is equal to or greater than the reference temperature.

The cooking apparatus may further include a display unit to display the stop of the operation of the steam supplying unit.

The cooking apparatus may further include a fan, and the control unit may operate the fan to reduce the internal temperature of the cooking chamber if the internal temperature of the cooking chamber is equal to or greater than the reference temperature.

The control unit may sense the internal temperature of the cooking chamber, which varies according to the operation of the fan, through the temperature sensing unit, and stop the fan and operate the steam supplying unit if the sensed internal temperature of the cooking chamber is less than the reference temperature.

The control unit may sense the internal temperature of the cooking chamber, which varies according to the operation of the fan, through the temperature sensing unit for at least a predetermined time, and stop the fan and stop the operation of the steam supplying unit if the sensed internal temperature of the cooking chamber is equal to or greater than the reference temperature.

In accordance with another aspect of the invention, a cooking apparatus includes: a cooking chamber; a circulation fan to circulate air in the cooking chamber; a steam supplying unit to supply steam into the cooking chamber; a temperature sensing unit to sense an internal temperature of the cooking chamber; and a control unit to drive the circulation fan to make a temperature distribution in the cooking chamber uniform, compare the sensed internal temperature with a reference temperature, and operate the steam supplying unit if the internal temperature of the cooking chamber is less than the reference temperature.

The control unit may stop the operation of the steam supplying unit if the internal temperature of the cooking chamber is equal to or greater than the reference temperature.

The cooking apparatus may further include a display unit to display the stop of the operation of the steam supplying unit.

The control unit may operate the circulation fan to reduce the internal temperature of the cooking chamber if the internal temperature of the cooking chamber is equal to or greater than the reference temperature.

The control unit may sense the internal temperature of the cooking chamber, which varies according to the operation of the circulation fan, through the temperature sensing unit, and stop the circulation fan and operate the steam supplying unit if the sensed internal temperature of the cooking chamber is less than the reference temperature.

The control unit may sense the internal temperature of the cooking chamber, which varies according to the operation of the circulation fan, through the temperature sensing unit for at least a predetermined time, and stop the circulation fan and stop the operation of the steam supplying unit if the sensed internal temperature of the cooking chamber is equal to or greater than the reference temperature.

The cooking apparatus may further include a cooling fan to cool the inside of the cooking chamber, and the control unit may operate the cooling fan to reduce the internal temperature of the cooking chamber if the internal temperature of the cooking chamber is equal to or greater than the reference temperature.

The control unit may sense the internal temperature of the cooking chamber, which varies according to the operation of the cooling fan, through the temperature sensing unit, and stop the cooling fan and operate the steam supplying unit if the sensed internal temperature of the cooking chamber is less than the reference temperature.

The control unit may sense the internal temperature of the cooking chamber, which varies according to the operation of the cooling fan, through the temperature sensing unit for at least a predetermined time, and stop the cooling fan and stop the operation of the steam supplying unit if the sensed internal temperature of the cooking chamber is equal to or greater than the reference temperature.

In accordance with another aspect of the invention, a method controls steam cleaning of a cooking apparatus, wherein the method includes: receiving a steam cleaning command of the inside of a cooking chamber; sensing an internal temperature of the cooking chamber according to the steam cleaning command; and comparing the sensed internal temperature of the cooking chamber with a reference temperature and supplying steam into the cooking chamber if the internal temperature of the cooking chamber is less than the reference temperature.

The method may further include displaying a state in which the steam cannot be supplied into the cooking chamber if the internal temperature of the cooking chamber is equal to or greater than the reference temperature.

The method may further include cooling air in the cooking chamber if the internal temperature of the cooking chamber is equal to or greater than the reference temperature; and sensing the internal temperature of the cooking chamber, which varies by cooling the air in the cooking chamber, and stopping an operation of cooling the air in the cooking chamber and supplying the steam into the cooking chamber if the internal temperature of the cooking chamber is less than the reference temperature.

The method may further include determining whether the cooling of the air in the cooking chamber is performed for at least a predetermined time; and stopping the operation of cooling the air in the cooking chamber and stopping an operation of supplying the steam into the cooking chamber if the internal temperature of the cooking chamber, which varies by cooling the air in the cooking chamber to at least the predetermined temperature, is equal to or greater than the reference temperature.

In accordance with another aspect of the invention, a method controls steam cleaning of a cooking apparatus, wherein the method includes: receiving a steam cleaning command of the inside of a cooking chamber; circulating air in the cooking chamber according to the steam cleaning command; sensing an internal temperature of the cooking chamber; and circulating the air in the cooking chamber to make a temperature distribution in the cooking chamber uniform, comparing the sensed internal temperature of the cooking chamber with a reference temperature, and supplying steam into the cooking chamber if the internal temperature of the cooking chamber is less than the reference temperature.

The method may further include displaying a state in which the steam cannot be supplied into the cooking chamber if the internal temperature of the cooking chamber is equal to or greater than the reference temperature.

The method may further include cooling air in the cooking chamber if the internal temperature of the cooking chamber is equal to or greater than the reference temperature.

The method may further include sensing the internal temperature of the cooking chamber, which varies by cooling the air in the cooking chamber, and supplying the steam into the cooking chamber if the internal temperature of the cooking chamber is less than the reference temperature.

The method may further include determining whether the cooling of the air in the cooking chamber is performed for at least a predetermined time; and stopping the operation of cooling the air in the cooking chamber and stopping an operation of supplying the steam into the cooking chamber if the internal temperature of the cooking chamber, which varies by cooling the air in the cooking chamber to at least the predetermined temperature, is equal to or greater than the reference temperature.

In a cooking apparatus and a method of controlling steam cleaning thereof according to the present invention, cleaning performance is improved by maintaining an internal temperature of a cooking chamber at a temperature suitable for steam condensation at the time of cleaning the inside of the cooking chamber using steam so as to maximize the amount of steam. In addition, a steam cleaning performance is optimized by driving a fan at an initial steam cleaning operation to make a temperature distribution in a cooking chamber uniform, and then performing the steam cleaning in a state in which the inside of the cooking chamber is uniformly covered by moisture.

Further, optimal steam cleaning performance is realized in an even temperature condition, by sensing an internal temperature of a cooking chamber when steam cleaning is started, performing steam cleaning if the internal temperature is less than a predetermined temperature, driving a fan for a predetermined time to reduce the internal temperature of the cooking chamber, and then performing the steam cleaning if the internal temperature is equal to or greater than the predetermined temperature.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is an appearance perspective view of a cooking apparatus according to an embodiment of the present invention;
FIG. 2 is a front view of the cooking apparatus according to the embodiment of FIG. 1 of the present invention;
FIG. 3 is a side cross-sectional view of the cooking apparatus according to the embodiment of FIG. 1 of the present invention;
FIG. 4 is a view showing a configuration to control steam cleaning of the cooking apparatus according to an embodiment of the present invention;
FIG. 5 is a flowchart illustrating a method of controlling steam cleaning of the cooking apparatus according to a first embodiment of the present invention;
FIG. 6 is a flowchart illustrating a method of controlling steam cleaning of the cooking apparatus according to a second embodiment of the present invention;
FIG. 7 is a flowchart illustrating a method of controlling steam cleaning of the cooking apparatus according to a third embodiment of the present invention; and
FIG. 8 is a flowchart illustrating a method of controlling steam cleaning of the cooking apparatus according to a fourth embodiment of the present invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

Hereinafter, embodiments of the present invention will be described in detail with reference to the accompanying drawings.

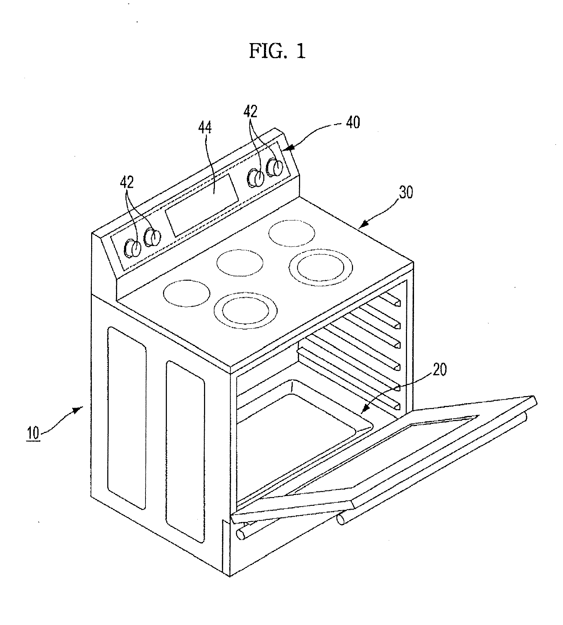

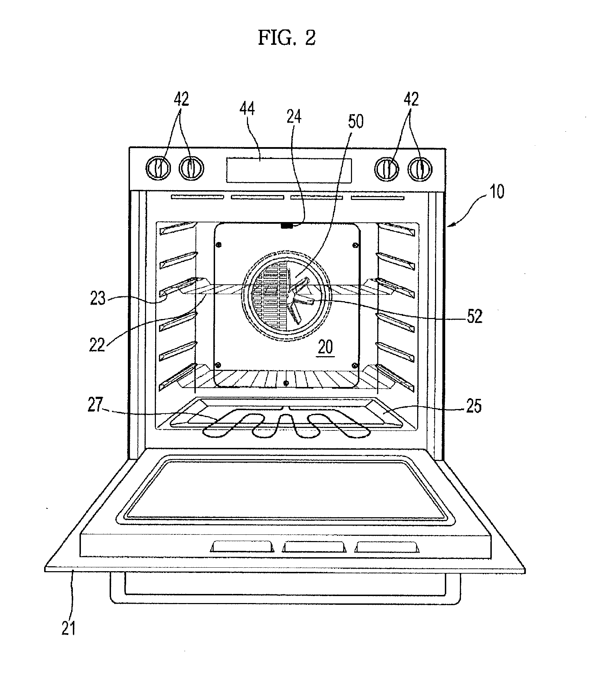

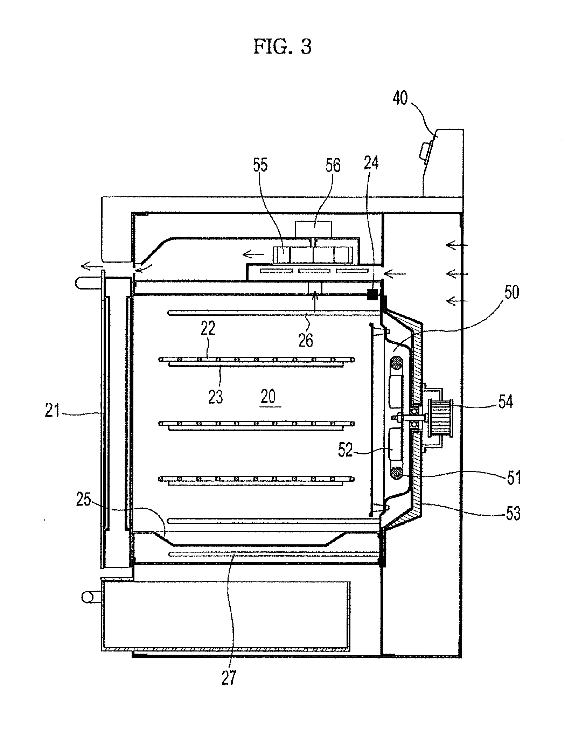

FIG. 1 is an appearance perspective view of a cooking apparatus according to an embodiment of the present invention, FIG. 2 is a front view of the cooking apparatus according to the embodiment of FIG. 1 of the present invention, and FIG. 3 is a side cross-sectional view of the cooking apparatus according to the embodiment of FIG. 1 of the present invention.

In FIG. 1, the cooking apparatus according to the present invention includes a cooking chamber 20 to heat and cook food in an airtight state in a main body 10, which has a cabinet shape and forms an appearance, a top plate to heat and cook food in a cook-top, and an operation panel 40 to control an operation of the cooking apparatus. The operation panel 40 includes an input unit 42 to input cooking information such as a cooking time and cooking menu and a display unit 44 to display the input cooking information and an operation state of the cooking apparatus.

In FIGs. 2 and 3, a door 21 to open and close an opened front surface of the cooking chamber 20 is provided on the front surface of the cooking chamber 20, a plurality of guide rails 23 on which to put a tray 22, on which the food is laid, and on which the tray slides into and out of the cooking chamber 20 is provided on both side surfaces of the cooking chamber 20, and a temperature sensor 24 to sense an internal temperature of the cooking chamber 20 is provided at the upper side of a rear surface of the cooking chamber 20.

A water container 25, which contains water used to generate steam to perform steam cleaning of the inside of the cooking chamber 20, is formed in the bottom of the cooking chamber 20 with a predetermined depth. When a user wants to clean the cooking chamber 20, the user puts a predetermined amount (about 10 oz (300 ml)) of water in the water container 25 formed in the bottom of the cooking chamber 20 such that the inside of the cooking chamber is covered with moisture when the water is changed into steam.

An upper heater 26 and a lower heater 27 are respectively mounted at the upper and lower sides of the cooking chamber 20. The lower heater 27 mounted on the bottom of the cooking chamber 20 is used to heat water contained in the water container 25 at the time of steam cleaning such that the inside of the cooking chamber 20 is covered with moisture.

A ventilation chamber 50 to ventilate the inside of the cooking chamber 20 is provided on the rear surface of the cooking chamber 20, and an annular convection heater 51 and a circulation fan (or a convection fan) 52, which is mounted on an inner circumference of the convection heater 51 so as to circulate heat generated by the heaters 26, 27 and 51, are provided in the ventilation chamber 50.

A heat insulating wall 53 is provided at the rear side of the ventilation chamber 50 and a circulation fan motor 54 to drive the circulation fan 52 is provided between the heat insulating wall 53 and the main body 10.

A cooling fan 55 to cool the inside of the cooking chamber 20 and the other electric/electronic components and a cooling fan motor 56 are provided at the upper side of the cooking chamber 20.

By such a configuration, when the circulation fan 52 is rotated, air in the cooking chamber 20 is sucked to the ventilation chamber 50 to be sent in an outer circumferential direction of the circulation fan 52. Accordingly, air sucked from the cooking chamber 20 to the ventilation chamber 50 is heated by the convection heater 51 mounted on the outer circumference of the circulation fan 52 and is then returned to the inside of the cooking chamber 20. When hot air is circulated in the cooking chamber 20, the food is heated and cooked by the hot air

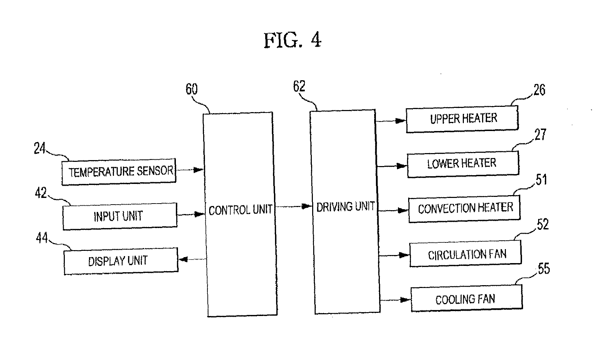

FIG. 4 is a view showing a configuration to control steam cleaning of the cooking apparatus according to an embodiment of the present invention, which includes the temperature sensor 24, the input unit 42, the display unit 44, a control unit 60 and a driving unit 62.

The temperature sensor 24 senses the internal temperature of the cooking chamber 20 at the time of heating and cooking or steam cleaning, and the input unit 42 inputs a user's command for start of the steam cleaning operation and the cooking information (the cooking time, the cooking menu and so on) to the control unit 60. The input unit 42 has a plurality of buttons including a steam cleaning start button.

The display unit 44 displays a message (e.g., "Hot" or "Door open") indicating that the inside of the cooking chamber 20 is in a hot state and the steam cleaning operation is impossible, if the internal temperature of the cooking chamber 20 is equal to or greater than a temperature (about 100 to 125 °F; hereinafter, referred to as a reference temperature) suitable for steam condensation at the time of steam cleaning.

The control unit 60 is a microcomputer to control the operation of the cooking apparatus according to the user's command input through the input unit 42, which senses the internal temperature of the cooking chamber 20 through the temperature sensor 24 in order to maintain the internal temperature of the cooking chamber 20 at the reference temperature suitable for steam condensation at steam cleaning. The control unit 60 performs the steam cleaning operation which drives the lower heater 27 and heats the water contained in the water container 25 such that the inside of the cooking chamber 20 is covered with moisture if the internal temperature of the cooking chamber 20 is less than the predetermined reference temperature and performs the steam cleaning operation after driving the circulation fan 52 and cooling the inside of the cooking chamber 20 if the internal temperature of the cooking chamber 20 is equal to or greater than the reference temperature.

The control unit 60 performs the steam cleaning operation such that the inside of the cooking chamber 20 is uniformly covered with moisture, after driving the circulation fan 52 for a predetermined time (about one minute; hereinafter, referred to as a first time) at an initial steam cleaning operation to eliminate a difference in temperature between the upper and lower sides of the cooking chamber 20 such that a uniform temperature distribution is obtained in the cooking chamber 20.

The driving unit 62 operates and stops the upper heater 26, the lower heater 27, the convection heater 51, the circulation fan 52 and the cooling fan 55 according to a driving control signal of the control unit 60.

Hereinafter, the operation and the effect of the cooking apparatus having the above-described configuration and the method of controlling the steam cleaning will be described.

The cooking apparatus according to the present invention optimizes cleaning performance by maximizing the amount of steam generated in the cooking chamber 20 when the user cleans the cooking chamber 20. For the operation of the present invention, the user previously puts the predetermined amount (about 10 oz (300 ml)) of water in the water container 25 of the cooking chamber 20. At this time, the amount of water put in the water container 25 may be described in a product manual or may be adjusted by a separate measuring cup or the like.

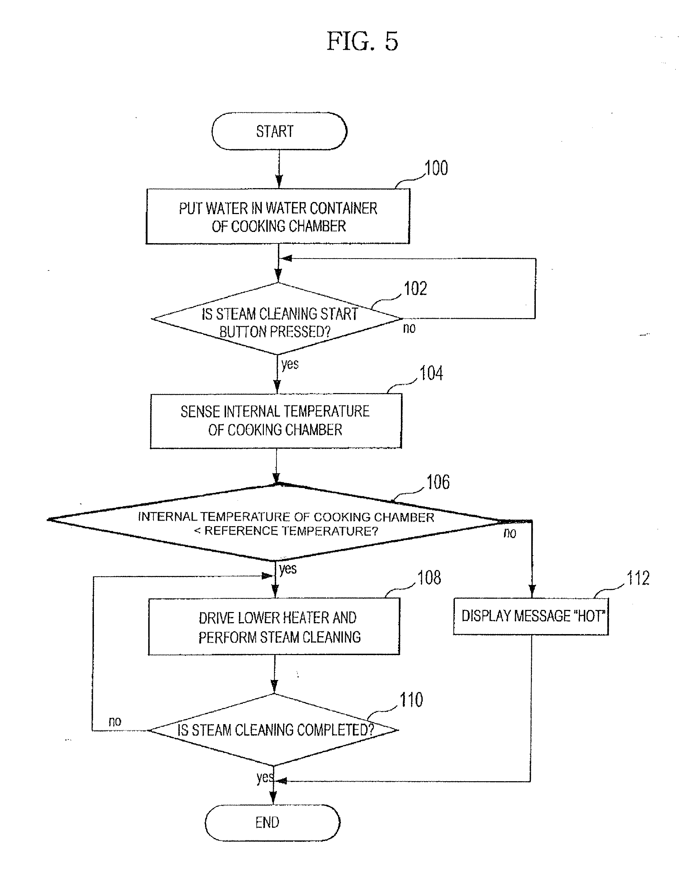

FIG. 5 is a flowchart illustrating a method of controlling steam cleaning of the cooking apparatus according to a first embodiment of the present invention.

First, in order to perform the steam cleaning of the cooking apparatus, the user puts a predetermined amount of water in the water container 25 of the cooking chamber 20 (100) and closes the door 21. Then, when the steam cleaning start button provided in the input unit 42 is pressed, a user's command for steam cleaning is input to the control unit 60.

Accordingly, the control unit 60 determines whether the steam cleaning start button is pressed (102) and senses the internal temperature of the cooking chamber 20 through the temperature sensor 24 (104) if the steam cleaning start button is pressed.

Subsequently, the control unit 60 determines whether the internal temperature of the cooking chamber 20 is less than the predetermined reference temperature (a maximum temperature suitable for steam condensation; about 100 to 125 °F) (106), determines that the inside of the cooking chamber 20 is at a temperature suitable for steam condensation, that is, a temperature condition that the inside of the cooking chamber 20 can be sufficiently covered with moisture, if the internal temperature of the cooking chamber 20 is less than the reference temperature, and drives the lower heater 27 (108).

The water contained in the water container 25 is started to be heated by the driving of the lower heater 27, steam is generated if the water is heated to at least a predetermined temperature, and the inside of the cooking chamber 20 is sufficiently covered with moisture. At this time, since scraps of food stuck to the inside of the cooking chamber 20 have been adjusted to a state that is easily eliminated, the user opens the door of the cooking chamber 20 and scrubs the inside of the cooking chamber 20 after the steam cleaning operation is completed, thereby easily cleaning the inside of the cooking chamber.

Thereafter, the control unit 60 determines whether the steam cleaning is completed (110), returns to Operation 104 to perform a subsequent operation if it is determined that the steam cleaning is not completed, and finishes the steam cleaning operation of the cooking apparatus if it is determined that the steam cleaning is completed.

Meanwhile, if it is determined that the internal temperature of the cooking chamber 20 is equal to or greater than the reference temperature in Operation 106, then the control unit 60 determines that the inside of the cooking chamber 20 is in the hot (or warm) state, that is, in a temperature condition that the inside (e.g., the wall) of the cooking chamber 20 cannot be sufficiently covered with moisture and displays the message (e.g., Hot) indicating that the steam cleaning operation is impossible through the display unit 44 (112) and stops the steam cleaning operation.

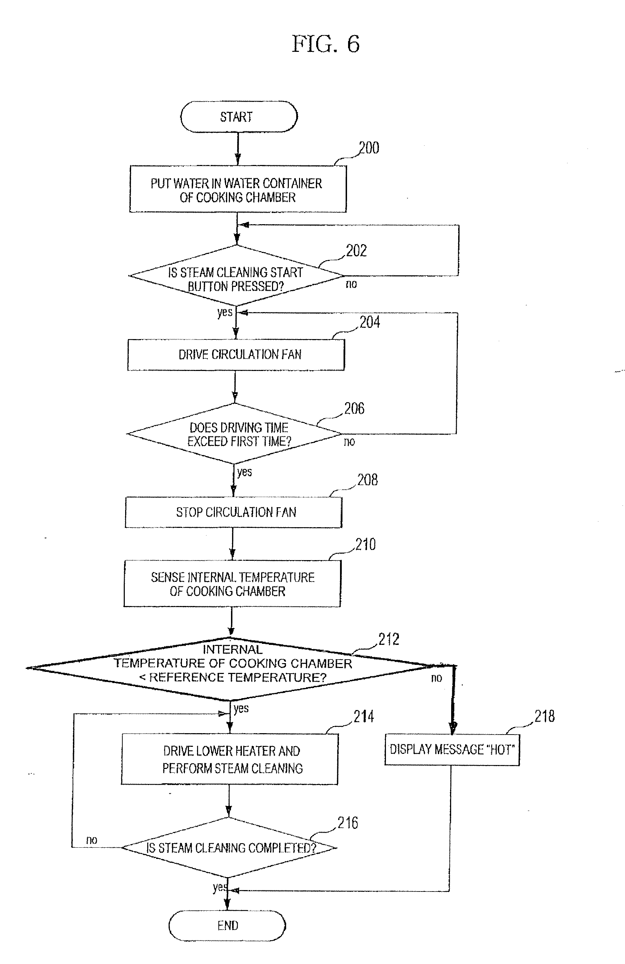

Next, a method of controlling stream cleaning after the temperature distribution in the cooking chamber 20 is made uniform at the time of an initial steam cleaning operation will be described with reference to FIG. 6.

FIG. 6 is a flowchart illustrating a method of controlling steam cleaning of the cooking apparatus according to a second embodiment of the present invention. The same portions as FIG. 5 will be omitted to avoid repetition of description.

First, the user puts a predetermined amount of water in the water container 25 of the cooking chamber 20 (200) and closes the door 21. Then, when the steam cleaning start button provided in the input unit 42 is pressed, the control unit 60 determines whether the steam cleaning start button is pressed (202) and drives the circulation fan 52 provided in the ventilation chamber of the cooking chamber 20 (204) if the steam cleaning start button is pressed.

By the driving of the circulation fan 52, air is circulated in the cooking chamber 20 such that the difference in temperature between the upper and lower sides of the cooking chamber 20 is started to be reduced.

Subsequently, the control unit 60 determines whether the driving time of the circulation fan 52 exceeds the predetermined first time (206) and continuously drives the circulation fan 52 until the driving time exceeds the first time if it is determined that the driving time does not exceed the first time, thereby eliminating the difference in temperature between the upper and lower sides of the cooking chamber 20 such that the temperature distribution in the cooking chamber 20 becomes uniform.

If it is determined that the driving time of the circulation fan 52 exceeds the first time in Operation 206, the control unit 60 determines that the temperature distribution in the cooking chamber 20 has become uniform, stops the circulation fan 52 (208), and senses the internal temperature of the cooking chamber 20 through the temperature sensor 24 (210).

It is determined whether the internal temperature of the cooking chamber 20 is less than the reference temperature (212). The control unit 60 drives the lower heater 27 (214) if the internal temperature of the cooking chamber 20 is less than the reference temperature.

By the driving of the lower heater 27, the water contained in the water container 25 begins to be heated, steam is generated if the water is heated to at least the predetermined temperature, and the inside of the cooking chamber 20 having the uniform temperature distribution is uniformly covered with moisture.

Thereafter, the control unit 60 determines whether the steam cleaning is completed (216), returns to Operation 210 to perform a subsequent operation if it is determined that the steam cleaning is not completed, and finishes the steam cleaning operation of the cooking apparatus if it is determined that the steam cleaning is completed.

Meanwhile, if it is determined that the internal temperature of the cooking chamber 20 is equal to or greater than the reference temperature in Operation 212, then the control unit 60 displays the message (e.g., Hot) indicating that the steam cleaning operation is impossible through the display unit 44 (218) and stops the steam cleaning operation.

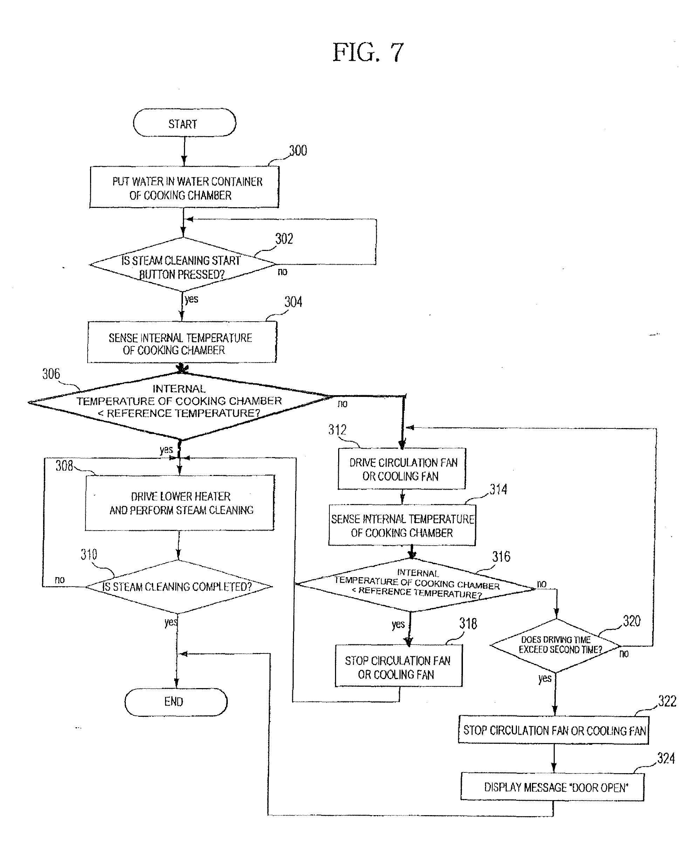

Next, a method of controlling steam cleaning after the internal temperature of the cooking chamber 20 is reduced if the internal temperature of the cooking chamber 20 is equal to or greater than the reference temperature will be described with reference to FIG. 7.

FIG. 7 is a flowchart illustrating a method of controlling steam cleaning of the cooking apparatus according to a third embodiment of the present invention. The same portions as FIGs. 5 and 6 will be omitted in order to avoid repetition of description.

First, the user puts a predetermined amount of water in the water container 25 of the cooking chamber 20 (300) and closes the door 21. Then, when the steam cleaning start button provided in the input unit 42 is pressed, the control unit 60 determines whether the steam cleaning start button is pressed (302) and senses the internal temperature of the cooking chamber 20 through the temperature sensor 24 (304) if the steam cleaning start button is pressed.

It is determined whether the internal temperature of the cooking chamber 20 is less than the reference temperature (306). The control unit 60 drives the lower heater 27 (308) if the internal temperature of the cooking chamber 20 is less than the reference temperature.

By the driving of the lower heater 27, the water contained in the water container 25 begins to be heated, steam is generated if the water is heated to at least a predetermined temperature, and the inside of the cooking chamber 20 is sufficiently covered with moisture.

Thereafter, the control unit 60 determines whether the steam cleaning is completed (310), returns to Operation 304 to perform a subsequent operation if it is determined that the steam cleaning is not completed, and finishes the steam cleaning operation of the cooking apparatus if it is determined that the steam cleaning is completed.

Meanwhile, if it is determined that the internal temperature of the cooking chamber 20 is equal to or greater than the reference temperature in Operation 306, then the control unit 60 drives the circulation fan 52 or the cooling fan 55 (312) to reduce the internal temperature of the cooking chamber 20.

By the driving of the circulation fan 52 or the cooling fan 55, the air is circulated in the cooking chamber 20, the internal temperature of the cooking chamber 20 begins to be reduced, and the internal temperature of the cooking chamber 20 at this time is sensed through the temperature sensor 24 (314).

It is determined whether the internal temperature of the cooking chamber 20 is less than the reference temperature (316). If it is determined that the internal temperature of the cooking chamber 20 is less than the reference temperature, the control unit 60 stops the circulation fan 52 or the cooling fan 55 (318) and progresses to Operation 308 for steam cleaning.

Meanwhile, if it is determined that the internal temperature of the cooking chamber 20 is equal to or greater than the reference temperature in Operation 316, the control unit 60 determines whether the driving time of the circulation fan 52 or the cooling fan 55 exceeds a second time (a maximum driving time of the circulation fan or the cooling fan, for reducing the internal temperature of the cooking chamber; about five minutes) (320), and continuously drives the circulation fan 52 or the cooling fan 55 until the driving time exceeds the second time if the driving time does not exceed the second time, thereby reducing the internal temperature of the cooking chamber 20.

If it is determined that the driving time of the circulation fan 52 or the cooling fan 55 exceeds the second time in Operation 320, then the control unit 60 determines that the internal temperature of the cooking chamber 20 cannot be reduced by only the driving of the circulation fan 52 or the cooling fan 55, stops the circulation fan 52 or the cooling fan 55 (322), displays the message (e.g., "Door open") indicating that the steam cleaning operation is impossible through the display unit 44 (324), and stops the steam cleaning operation.

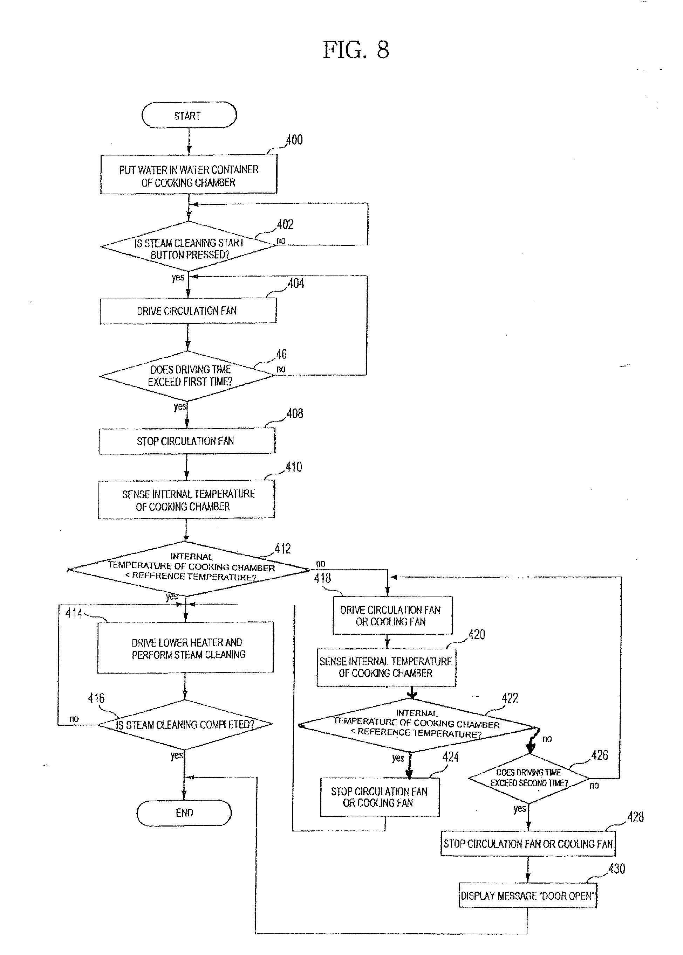

Next, a method of controlling steam cleaning after the temperature distribution in the cooking chamber 20 becomes uniform at the initial steam cleaning operation and the internal temperature of the cooking chamber 20 is reduced if the internal temperature of the cooking chamber 20 is equal to or greater than the reference temperature will be described with reference to FIG. 8.

FIG. 8 is a flowchart illustrating a method of controlling steam cleaning of the cooking apparatus according to a fourth embodiment of the present invention. The same portions as FIGS. 5 to 7 will be omitted to avoid repetition of description.

First, the user puts a predetermined amount of water in the water container 25 of the cooking chamber 20 (400) and closes the door 21. Then, when the steam cleaning start button provided in the input unit 42 is pressed, the control unit 60 determines whether the steam cleaning start button is pressed (402) and drives the circulation fan 52 provided in the ventilation chamber of the cooking chamber 20 (404) if the steam cleaning start button is pressed.

By the driving of the circulation fan 52, air is circulated in the cooking chamber 20 and the difference in temperature between the upper and lower sides of the cooking chamber 20 begins to be reduced.

Subsequently, the control unit 60 determines whether the driving time of the circulation fan 52 exceeds the predetermined first time (406) and determines that the temperature distribution in the cooking chamber 20 is made uniform if the driving time of the circulation fan 52 exceeds the first time, stops the circulation fan 52 (408), and senses the internal temperature of the cooking chamber 20 through the temperature sensor 24 (410).

It is then determined whether the internal temperature of the cooking chamber 20 is less than the reference temperature (412). The control unit 60 drives the lower heater 27 (414) if the internal temperature of the cooking chamber 20 is less than the reference temperature.

The water contained in the water container 25 begins to be heated by the driving of the lower heater 27, steam is generated if the water is heated to at least a predetermined temperature, and the inside of the cooking chamber 20 is uniformly covered with moisture.

Thereafter, the control unit 60 determines whether the steam cleaning is completed (416), returns to Operation 410 to perform a subsequent operation if it is determined that the steam cleaning is not completed, and finishes the steam cleaning operation of the cooking apparatus if it is determined that the steam cleaning is completed.

Meanwhile, if it is determined that the internal temperature of the cooking chamber 20 is equal to or greater than the reference temperature in Operation 412, then the control unit 60 drives the circulation fan 52 again or drives the cooling fan 55 (418) in order to reduce the internal temperature of the cooking chamber 20.

The internal temperature of the cooking chamber 20 is started to be reduced by the driving of the circulation fan 52 or the cooling fan 55, and the internal temperature of the cooking chamber 20 at this time is sensed through the temperature sensor 24 (420).

It is determined whether the internal temperature of the cooking chamber 20 is less than the reference temperature (422). If it is determined that the internal temperature of the cooking chamber 20 is less than the reference temperature, the control unit 60 stops the circulation fan 52 or the cooling fan 55 (424) and progresses to Operation 414 for steam cleaning.

Meanwhile, if it is determined that the internal temperature of the cooking chamber 20 is equal to or greater than the reference temperature in Operation 422, the control unit 60 determines whether the driving time of the circulation fan 52 or the cooling fan 55 exceeds the second time (426), and continuously drives the circulation fan 52 or the cooling fan 55 until the driving time exceeds the second time if the driving time does not exceed the second time, thereby reducing the internal temperature of the cooking chamber 20.

If it is determined that the driving time of the circulation fan 52 or the cooling fan 55 exceeds the second time in Operation 426, the control unit 60 determines that the internal temperature of the cooking chamber 20 cannot be reduced by only the driving of the circulation fan 52 or the cooling fan 55, stops the circulation fan 52 or the cooling fan 55 (428), displays the message (e.g., "Door open") indicating that the steam cleaning operation is impossible through the display unit 44 (430), and stops the steam cleaning operation.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A cooking apparatus comprising:
a cooking chamber;
a steam supplying unit to supply steam into the cooking chamber;
a temperature sensing unit to sense an internal temperature of the cooking chamber; and
a control unit to compare the sensed internal temperature with a reference temperature and operate the steam supplying unit if the internal temperature of the cooking chamber is less than the reference temperature.

2. The cooking apparatus according to claim 1, wherein the control unit stops the operation of the steam supplying unit if the internal temperature of the cooking chamber is equal to or greater than the reference temperature.

3. The cooking apparatus according to claim 2, further comprising a display unit to display the stop of the operation of the steam supplying unit.

4. The cooking apparatus according to claim 1, further comprising a fan,
wherein the control unit operates the fan to reduce the internal temperature of the cooking chamber if the internal temperature of the cooking chamber is equal to or greater than the reference temperature.

5. The cooking apparatus according to claim 4, wherein the control unit senses the internal temperature of the cooking chamber, which varies according to the operation of the fan, through the temperature sensing unit, and stops the fan and operates the steam supplying unit if the sensed internal temperature of the cooking chamber is less than the reference temperature.

6. The cooking apparatus according to claim 4, wherein the control unit senses the internal temperature of the cooking chamber, which varies according to the operation of the fan, through the temperature sensing unit for at least a predetermined time, and stops the fan and stops the operation of the steam supplying unit if the sensed internal temperature of the cooking chamber is equal to or greater than the reference temperature.

7. A cooking apparatus comprising:
a cooking chamber;
a circulation fan to circulate air in the cooking chamber;
a steam supplying unit to supply steam into the cooking chamber;
a temperature sensing unit to sense an internal temperature of the cooking chamber; and
a control unit to drive the circulation fan to make a temperature distribution in the cooking chamber uniform, compare the sensed internal temperature with a reference temperature, and operate the steam supplying unit if the internal temperature of the cooking chamber is less than the reference temperature.

8. The cooking apparatus according to claim 7, wherein the control unit stops operation of the steam supplying unit if the internal temperature of the cooking chamber is equal to or greater than the reference temperature.

9. The cooking apparatus according to claim 8, further comprising a display unit to display the stop of the operation of the steam supplying unit.

10. The cooking apparatus according to claim 7, wherein the control unit operates the circulation fan to reduce the internal temperature of the cooking chamber if the internal temperature of the cooking chamber is equal to or greater than the reference temperature.

11. The cooking apparatus according to claim 10, wherein the control unit senses the internal temperature of the cooking chamber, which varies according to the operation of the circulation fan, through the temperature sensing unit, and stops the circulation fan and operates the steam supplying unit if the sensed internal temperature of the cooking chamber is less than the reference temperature.

12. The cooking apparatus according to claim 10, wherein the control unit senses the internal temperature of the cooking chamber, which varies according to the operation of the circulation fan, through the temperature sensing unit for at least a predetermined time, and stops the circulation fan and stops the operation of the steam supplying unit if the sensed internal temperature of the cooking chamber is equal to or greater than the reference temperature.

13. The cooking apparatus according to claim 7, further comprising a cooling fan to cool the inside of the cooking chamber,
wherein the control unit operates the cooling fan to reduce the internal temperature of the cooking chamber if the internal temperature of the cooking chamber is equal to or greater than the reference temperature.

14. The cooking apparatus according to claim 13, wherein the control unit senses the internal temperature of the cooking chamber, which varies according to the operation of the cooling fan, through the temperature sensing unit, and stops the cooling fan and operates the steam supplying unit if the sensed internal temperature of the cooking chamber is less than the reference temperature.

15. The cooking apparatus according to claim 13, wherein the control unit senses the internal temperature of the cooking chamber, which varies according to the operation of the cooling fan, through the temperature sensing unit for at least a predetermined time, and stops the cooling fan and stops the operation of the steam supplying unit if the sensed internal temperature of the cooking chamber is equal to or greater than the reference temperature.

16. A method of controlling steam cleaning of a cooking apparatus, the method comprising:
receiving a steam cleaning command to clean an inside of a cooking chamber;
sensing an internal temperature of the cooking chamber according to the steam cleaning command; and
comparing the sensed internal temperature of the cooking chamber with a reference temperature and supplying steam into the cooking chamber if the internal temperature of the cooking chamber is less than the reference temperature.

17. The method according to claim 16, further comprising displaying a state in which the steam cannot be supplied into the cooking chamber if the internal temperature of the cooking chamber is equal to or greater than the reference temperature.

18. The method according to claim 16, further comprising:
cooling air in the cooking chamber if the internal temperature of the cooking chamber is equal to or greater than the reference temperature; and
sensing the internal temperature of the cooking chamber, which varies by cooling the air in the cooking chamber, and stopping an operation of cooling the air in the cooking chamber and supplying the steam into the cooking chamber if the internal temperature of the cooking chamber is less than the reference temperature.

19. The method according to claim 18, further comprising:
determining whether the cooling of the air in the cooking chamber is performed for at least a predetermined time; and
stopping the operation of cooling the air in the cooking chamber and stopping an operation of supplying the steam into the cooking chamber if the internal temperature of the cooking chamber, which varies by cooling the air in the cooking chamber to at least a predetermined temperature, is equal to or greater than the reference temperature.

20. A method of controlling steam cleaning of a cooking apparatus, the method comprising:
receiving a steam cleaning command to clean an inside of a cooking chamber;
circulating air in the cooking chamber according to the steam cleaning command;
sensing an internal temperature of the cooking chamber; and
circulating the air in the cooking chamber to make a temperature distribution in the cooking chamber uniform, comparing the sensed internal temperature of the cooking chamber with a reference temperature, and supplying steam into the cooking chamber if the internal temperature of the cooking chamber is less than the reference temperature.

21. The method according to claim 20, further comprising displaying a state in which the steam cannot be supplied into the cooking chamber if the internal temperature of the cooking chamber is equal to or greater than the reference temperature.

22. The method according to claim 20, further comprising cooling air in the cooking chamber if the internal temperature of the cooking chamber is equal to or greater than the reference temperature.

23. The method according to claim 22, further comprising sensing the internal temperature of the cooking chamber, which varies by cooling the air in the cooking chamber, and supplying the steam into the cooking chamber if the internal temperature of the cooking chamber is less than the reference temperature.

24. The method according to claim 22, further comprising:
determining whether the cooling of the air in the cooking chamber is performed for at least a predetermined time; and
stopping the operation of cooling the air in the cooking chamber and stopping an operation of supplying the steam into the cooking chamber if the internal temperature of the cooking chamber, which varies by cooling the air in the cooking chamber to at least a predetermined temperature, is equal to or greater than the reference temperature.
